# EUROPÄISCHE PATENTANMELDUNG

(11) **EP 2 301 895 A1**
(43) Veröffentlichungstag der Anmeldung: **30.03.2011**
(21) Anmeldenummer: 09168621.2
(22) Anmeldetag: 25.08.2009
(51) Int. Cl.: C02F 1/52, C02F 1/40, C02F 101/32, C02F 103/00, C02F 101/20, C02F 1/66, C02F 1/00

(54) **Verfahren zur Behandlung von Bilgewasser aus dem Schiffsbetrieb**

(71) Anmelder: Blue C Key GmbH & Co. KG, 22559 Hamburg (DE)
(72) Erfinder: Burmester, Hans Joachim, 21220 Seevetal (DE)
(74) Vertreter: Raffay & Fleck

(57) **Zusammenfassung**

Das Verfahren zur Behandlung von Bilgewasser aus dem Schiffsbetrieb, bei dem das Bilgewasser in einer ersten Reinigungsstufe kontinuierlich durch eine erste Entölungs- und Filteranlage und anschließend für eine mögliche Reinigung in einer zweiten Reinigungsstufe in einen chemischen Behandlungstank geführt wird, erlaubt einen höheren Durchsatz von behandeltem Bilgewasser und zudem eine Reduzierung der Menge der für die Reinigung eingesetzten Chemikalien ermöglicht.
Das Bilgewasser wird zunächst ohne weitere Behandlung aus dem chemischen Behandlungstank abgelassen und über ein Sensorelement zur Ermittlung einer Kontaminationskonzentration geleitet, wobei das aus dem Behandlungstank austretende Bilgewasser als nicht kontaminiert eingestuft und abgeführt wird, wenn die von dem Sensorelement ermittelte Kontaminationskonzentration einen vorgebbaren Grenzwert nicht überschreitet. Das aus dem chemischen Behandlungstank auslaufende Bilgewasser wird hingegen, wenn die von dem Sensorelement ermittelte Kontaminationskonzentration den vorgebbaren Grenzwert überschreitet, als kontaminiert eingestuft und zurückgeführt zur nochmaligen Einspeisung in den chemischen Behandlungstank, der dann mit einer Charge Bilgewasser befüllt wird, die einer chemischen Behandlung zur Ausfällung von Kontaminationen unterzogen und nach Ablauf der Behandlungsdauer abgelassen und über das Sensorelement zur Ermittlung der Kontaminationskonzentration geführt und bei Einhaltung des Grenzwertes abgeführt wird.

## Beschreibung

Die Erfindung betrifft ein Verfahren zur Behandlung von Bilgewasser aus dem Schiffsbetrieb gemäß dem Oberbegriff des Patentanspruchs 1.

Es ist allgemein bekannt, dass das sich im Schiffsrumpf während des Betriebes ansammelnde Bilgewasser mit Öl, sonstigen Kohlenwasserstoffen und anderen Verschmutzungen, wie Schwermetallen oder dgl., kontaminiert ist. Insbesondere bei der Seeschifffahrt, wo Schiffe längere Zeit auf den Meeren unterwegs sind, sammeln sich erhebliche Mengen an Bilgewasser an. Diese dürfen nicht ohne weiteres über Bord gepumpt werden, um einen Verschmutzung des Meerwassers zu vermeiden. So sieht das internationale Übereinkommen von 1973/78 zur Verhütung der Meeresverschmutzung durch die Schiffart (MARPOL-Übereinkommen) vor, dass ölhaltiges Wasser mit einem Ölgehalt von mehr als 15 ppm nicht in die Meeresumwelt abgelassen werden darf. In sogenannten Sondergebieten, die in den Abkommen gesondert ausgewiesen sind, beträgt der Grenzwert sogar nur 5 ppm. Zu diesen Sondergebieten zählen besonders empfindliche Meeresgebiete, wie z.B. die gesamte Ostsee und die Nordsee.

In Liegehäfen kann das verschmutzte Bilgewasser als Sonderabfall an hierauf spezialisierte Entsorgungsbetriebe abgegeben werden. Allerdings ist die Entsorgung kostspielig, und durch den Transport des üblicherweise in entsprechenden Tanks aufgefangenen Bilgewasser wird wertvoller Laderaum verbraucht, und das Befördern der entsprechenden zusätzlichen Ladung führt zu einem erhöhten Verbrauch an Antriebsenergie und damit Treibstoff für das Schiff.

Entsprechend gibt es Überlegungen und Ansätze, das Bilgewasser bereits während der Seereise an Bord des Schiffes soweit aufzubereiten, dass es entweder bedenkenlos und in Übereinstimmung mit den internationalen Richtlinien über Bord gepumpt werden oder sogar an Bord des Schiffes als Brauchwasser Verwendung finden kann.

Ein mögliches Verfahren und eine Anlage zur Aufbereitung von Bilgewasser sind in der DE 101 26 692 A1 beschrieben und offenbart. Gemäß dem dortigen Verfahren wird das Bilgewasser zweistufig behandelt, nämlich zuerst in einer Bilgewasserentölungsanlage von frei auf dem Bilgewasser aufschwimmenden Öl (einem Ölfilm) getrennt und im Anschluss daran chargenweise in einem chemischen Behandlungsbehälter einer chemischen Behandlung unterzogen, bei der Kontaminationen, wie gelöste Kohlenwasserstoffe und Schwermetalle chemisch gebunden und ausgefällt werden. Das so erhaltene, gereinigte Wasser kann gemäß der DE 101 26 692 A1 als Brauch- im Extremfall sogar als Trinkwasser an Bord wiederverwendet, im Überschussfalle bedenkenlos über Bord geleitet werden.

Dieses Verfahren und die Bilgewasseraufbereitungsanlage gemäß diesem Stand der Technik haben sich in praktischen Tests bereits bewährt, sie führen zu einer sehr guten Reinigung des Bilgewassers. Allerdings besteht der Nachteil, dass die in dem chemischen Reinigungstank durchgeführte chemische Einigung des Bilgewassers nur chargenweise durchgeführt werden kann mit einer entsprechenden Verweildauer des Wassers in dem Tank. Dies führt zu einem vergleichsweise geringen Durchsatz von Bilgewasser, so dass die in der DE 101 26 692 A1 beschriebene Anlage bei starker Zufuhr von Bilgewasser an ihre Kapazitätsgrenzen gerät und eine ausreichend schnelle Aufbereitung von Bilgewasser ggf. nicht mehr möglich ist, so dass sich kontaminiertes Bilgewasser ansammelt. Darüber hinaus werden während der chemischen Behandlung in dem chemischen Behandlungstank für jede Charge chemische Zusatzstoffe verbraucht, die einesteils kostspielig in der Anschaffung sind, anderenteils als zusätzliche Kontamination in dem bei der Aufbereitung anfallenden Schlamm auftreten, der wiederum im Hafen von entsprechenden Entsorgungsunternehmen teuer zu entsorgen ist.

Ausgehend von diesen erkannten Problemen und Unzulänglichkeiten ist es Aufgabe der Erfindung, hier ein verbessertes Verfahren zur Behandlung von Bilgewasser aus dem Schiffsbetrieb anzugeben, welches einen höheren Durchsatz von behandeltem Bilgewasser erlaubt und zudem eine Reduzierung der Menge der für die Reinigung eingesetzten Chemikalien ermöglicht.

Diese Aufgabe wird gelöst durch ein Verfahren mit den Merkmalen des Patentanspruchs 1.

Die Besonderheit des erfindungsgemäßen Verfahrens besteht darin, das Verfahren quasikontinuierlich bzw. als Hybridverfahren zwischen einem kontinuierlichen und einem chargenweise arbeitenden Verfahren auszubilden. So wird bei dem erfindungsgemäßen Verfahren nämlich zunächst ein chemischer Behandlungstank nur im Durchlauf von dem in der ersten Reinigungsstufe kontinuierlich vorgereinigtem Bilgewasser durchströmt. Erst wenn am Auslass des chemischen Behandlungstanks eine ein vorgegebenes Maß (z.B. entsprechend den MARPOL-Kriterien 15 ppm Ölgehalt bzw. in besonders geschützten Gebieten 5 ppm Ölgehalt) übersteigende Kontaminierung des Bilgewassers festgestellt wird, wird dieses zurückgeführt, und in einem weiteren Schritt wird der chemische Behandlungstank gefüllt und die darin enthaltene Charge an Bilgewasser chemisch behandelt zur weiteren Reinigung.

Auf diese Weise wird der kontinuierliche Durchsatz der Bilgewasserbehandlungsanlage nur dann durch ein chargenweises Abarbeiten in dem chemischen Reinigungstank unterbrochen, wenn die Konzentration der Kontamination ein solches Vorgehen verlangt. Ansonsten läuft die Anlage kontinuierlich mit einem hohen Durchsatz. Zudem wird bei dieser Vorgehensweise der Verbrauch an für die Behandlung in der zweiten Behandlungsstufe des chemischen Behandlungstankes erforderlichen Chemikalien minimiert. Chemikalien werden dem Bilgewasser nur dann zugegeben, wenn eine Überschreiten des Grenzwertes für die Kontaminationskonzentration festgestellt wird. Dies reduziert schließlich auch den Umfang des bei der chemischen Reinigung und Ausfällung anfallenden Schlammes, so dass auch hier der Aufwand einer Entsorgung im Hafen und die damit verbundenen Kosten gesenkt werden können.

Das Verfahren kann dabei so gesteuert werden, dass abhängig von der gemessenen Konzentration der Verunreinigung und deren Höhe eine Reinigung nur einer Charge in dem chemischen Reinigungstank erfolgt, wenn z.B. die Grenzkonzentration nur geringfügig überschritten wurde, oder dass aufeinanderfolgend und nacheinander mehrere Chargen in dem chemischen Behandlungstank einer zweiten Reinigungsstufe unterzogen werden, wenn z.B. die Konzentration der Verunreinigung höher lag, was auch in nachfolgende Portionen des Bilgewassers eine Verunreinigung in größerem Ausmaß vermuten lässt.

Um nach einer Überschreitung des Grenzwertes für die Kontamination eine möglichst optimale Reinigung des Bilgewassers zu erreichen, kann das in diesem Fall zurückgeführte Bilgewasser bis vor die erste Entölungs- und Filteranlage zurückgeführt werden, damit es diese erneut durchläuft und bereits in diesem Schritt eine zusätzliche Reinigung erfährt. Dies hilft insbesondere auch dabei, die ansonsten in der chemischen Fällstufe in dem chemischen Reinigungstank einzusetzenden Mengen an Chemikalien zu reduzieren. Denn durch die erneute Vorreinigung kann dem Bilgewasser in der Entölungs- und Filteranlage gegebenenfalls weiteres Öl und andere Verunreinigungen entzogen werden.

Um das aus dem chemischen Reinigungstank austretende Bilgewasser von dort aufgenommenen oder bei einer chemischen Reinigung noch im Bilgewasser verbleibenden Resten von Verunreinigungen (von Flocken ausgefällter Substanzen) zu reinigen, bevor das Bilgewasser auf den Sensor trifft, ist es von Vorteil, zwischen dem Ausgang aus dem chemischen Reinigungstank und dem Sensorelement ein oder mehrere Filterelemente vorzusehen.

Wie bereits ausgeführt ist das erfindungsgemäße Verfahren - und dadurch zeichnet es sich besonders aus - ein Hybridverfahren aus einem kontinuierlichen und einem chargenweise arbeitenden Verfahren. Chargenweise arbeitet das Verfahren dabei stets erst dann, wenn das Erfordernis einer chemischen Behandlung in dem chemischen Behandlungstank festgestellt wird. Dann jedoch ist es von Vorteil, dass der chemische Behandlungstank ablaufseitig geschlossen wird und nur bis zum Erreichen eines vorgegebenen Behandlungsfüllstandes mit aus dem Austritt der ersten Entölungs- und Filteranlage nachströmenden Bilgewasser befüllt und der Durchlauf durch die erste Behandlungs- und Filteranlage dann gestoppt wird. Selbstverständlich ist es auch möglich, die erste Behandlungs- und Filteranlage weiter mit Bilgewasser zu beschicken, das im Anschluss im Kreis geführt wird. Allerdings ist ein solches Vorgehen energieaufwendig und nicht rationell, so dass ein Abschalten des Zulaufes zu der ersten Entölungs- und Filteranlage bevorzugt wird.

Wird eine chemische Behandlung in der zweiten Behandlungsstufe als erforderlich erkannt, wenn also der vorgegebene Grenzwert für die Kontamination des Bilgewassers am Austritt des chemischen Behandlungstankes überschritten wird, so wird diese chemische Behandlung bevorzugt in drei Schritten durchgeführt. Dabei wird in einem ersten Schritt ein Säuerungsmittel zum Absenken des pH-Wertes auf einen für die Wirkung eines Fällungsmittels geeigneten Wert zugegeben. Ist dieser pH-Wert erreicht (dies wird in der Praxis durch entsprechende Sensoren überwacht), wird das Fällungsmittel zugegeben. Nach einer vorbestimmten Einwirk- und Ausfällzeit wird die in dem chemischen Behandlungstank befindliche Charge durch Zugabe eines Neutralisierungsmittels neutralisiert. Der ausgefällte Anteil wird aus dem chemischen Behandlungstank abgezogen oder durch einen Filter im Ablauf des chemischen Behandlungstankes abgesondert und einem Schlammsammelbecken zugeführt.

Das Bilgewasser kann nach der chemischen Behandlung den chemischen Behandlungstank durch den Ablauf verlassen. Üblicherweise funktioniert diese Art der chemischen Reinigung des Bilgewassers zuverlässig genug, um auf eine weitere Prüfung der Kontamination durch das Sensorelement zu verzichten. Es kann jedoch, um alle Eventualitäten eines möglichen Versagens auszuschließen, das so behandelte und gereinigte Bilgewasser wiederum über das Sensorelement geführt und bei festgestelltem Unterschreiten des Grenzwertes abgeführt werden.

Für die chemische Behandlung enthält das Säuerungsmittel vorzugsweise Salzsäure sowie Eisen(II)-Sulfat oder das Heptahydrat dieses Salzes. Das Fällungsmittel kann Natriumhydroxid enthalten. Als Neutralisationsmittel wird Ätznatron bevorzugt. Der die Wirksamkeit des Fällungsmittels geeignete pH-Wert liegt insbesondere in einem Bereich von pH3 bis pH6. Zusätzlich zu dem Fällungsmittel kann dem Bilgewasser zur Beschleunigung des Ausfällvorganges ein Flockungshilfsmittel zugegeben werden. Ein solches Flockungshilfsmittel bewirkt, dass die ausgefällten Feststoffe sich schneller zu großen Flocken zusammentun und damit zügiger in dem chemischen Behandlungstank zum Boden hin absinken, wo sie den Fällschlamm bilden, der am Ende der Behandlung abgezogen werden kann. Alternativ kann der Fällschlamm auch erst nach dem Verlassen der gesamten Flüssigkeit im Ablaufsystem des chemischen Behandlungstankes durch Filter abgetrennt werden.

Das abgeführte, behandelte und den vorgegebenen Grenzwert für die Kontamination unterschreitende Bilgewasser kann erfindungsgemäß wahlweise über Bord des Schiffes gepumpt oder aber in einem Brauchwassersammelbehälter gesammelt und als Brauchwasser an Bord des Schiffes eingesetzt werden. Dabei kommt insbesondere ein Einsatz als sogenanntes Grauwasser, z.B. im Bereich der Toilettenspülungen, in Betracht. Wenn der erreichte Wert für eine Kontamination derart niedrig ist, dass das behandelte Wasser Trinkwasserqualität aufweist, so kommt sogar eine Verwendung des Bilgewassers als Trinkwasser in Betracht. Insbesondere die Verwendung des behandelten und gereinigten Bilgewassers als Brauch- oder sogar Trinkwasser entlastet die Logistik des Schiffes in großem Maße. Denn das Mitführen von Brauch- sowie Trinkwasser für längere Schiffsreisen fordert Ladekapazitäten in einem erheblichen Maß, die nicht für die Mitführung von Fracht zur Verfügung stehen. Wenn es auf diese Weise also gelingt, den Raum, der für die Mitführung von Wasser benötigt wird, zu verringern, also den für die Mitführung von Fracht zur Verfügung stehenden Raum zu vergrößern, so ist dies letztlich mit einer Kapazitätserhöhung und damit Kostenabsenkung verbunden.

Weitere Vorteile und Merkmale des erfindungsgemäßen Verfahrens ergeben sich aus der nachfolgenden Beschreibung eines Ausführungsbeispiels anhand der beigefügten Figur. Dabei zeigt:

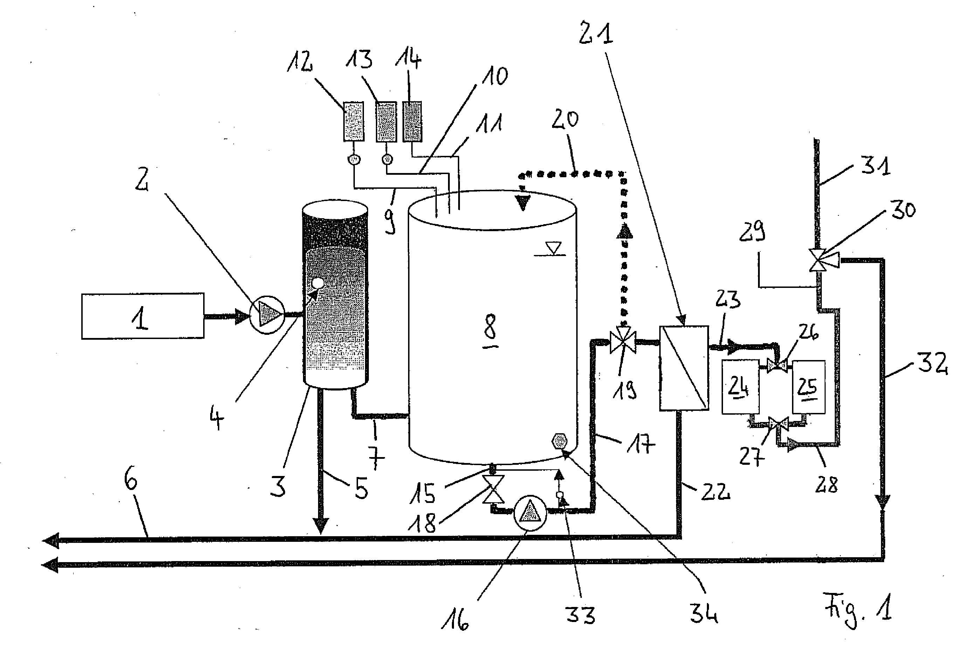

- Fig. 1: in schematischer Darstellung eine Anordnung zur Durchführung eines erfindungsgemäßen Verfahrens zur Behandlung von Bilgewasser.

In Fig. 1 ist schematisch ein Aufbau zur Durchführung des erfindungsgemäßen Verfahrens dargestellt. Anhand dieser Figur wird der Aufbau nachfolgend beschrieben und dabei auch die Durchführung des erfindungsgemäßen Verfahrens.

Aus der Bilge 1 eines Schiffes führt eine Leitung über eine Pumpe 2 in eine Entölungs- und Filteranlage 3. Diese ist mit einem Füllstandssensor 4 ausgestattet, der mit einer hier nicht nähe dargestellten Steuerung der Anlage zusammenarbeitet, die die Pumpe 2 bei Überschreiten eines Maximalfüllstandes in der Entölungs- und Filteranlage 3 stoppt und damit die Zufuhr weiteren Bilgewassers unterbindet.

Über einen Retentatauslass mit einer Retentatleitung 5 ist die Entölungs- und Filteranlage mit einer Schlammleitung 6 verbunden, die zu einem Schlammtank führt, in welchem die aus dem Bilgewasser ausgefilterten Rückstände als Öl- und Kontaminationsschlamm aufbewahrt werden.

Von der Entölungs- und Filteranlage 3 führt eine Filtratleitung 7 in einen chemischen Behandlungstank 8. In den chemischen Behandlungstank 8 führen Zulaufleitungen 9, 10, 11 über die mittels daran angeschlossener Dosiersysteme 12, 13, 14 verschiedene Behandlungschemikalien in den chemischen Behandlungstank 8 eingespeist werden können.

Der chemische Behandlungstank 8 weist ferner einen Auslass 15 auf, der über eine Pumpe 16 mit einer Rohrleitung 17 verbunden ist. Zwischen dem chemischen Behandlungstank 8 und der Pumpe 16 ist in dem Auslass 15 ein Ventil 18 angeordnet, mit dem der Auslass 1 5 geschlossen werden kann. Die Rohrleitung 17 ist über ein Dreiwegeventil 19 geführt, welches mit einem ersten Abzweig in eine Rückführleitung 20 überführt, die wiederum in dem chemischen Behandlungstank 8 endet. Ein zweiter Abzweig des Dreiwegeventils 19 führt zu einem Filter 21, der ausgangsseitig über eine Retentatleitung 22 mit der Schlammleitung 6 verbunden ist, sowie über eine Filtratleitung 23 mit einem durch die Nachfilter 24 und 25 gebildeten Nachfiltersystem. Die Nachfilter 24, 25 können über Ventile 26, 27 wahlweise mit der Filtratleitung 23 verbunden bzw. von dieser getrennt werden. Dies dient dazu, einen kontinuierlichen Betrieb des Nachfiltersystems zu ermöglichen, indem stets einer der beiden Nachfilter 24, 25 in das Leitungssystem geschaltet ist, während der andere der beiden Nachfilter 25, 24 regeneriert werden kann.

Eine Ausgangsleitung 28 ist über das Ventil 27 auslassseitig an das Nachfiltersystem angeschlossen. Bei 29 ist ein Kontaminationssensor in der Ausgangsleitung 28 angeordnet, der mit der Anlagensteuerung verbunden ist. Stromab des Kontaminationssensors 29 ist ein weiteres Dreiwegeventil 30 angeordnet. Mit einer ersten Ausgangsseite ist dieses Dreiwegeventil mit einer Abfuhrleitung 31 verbunden; ein zweiter Ausgang des Dreiwegeventils 30 führt in eine Bilgewasserrückführleitung 32. Diese Bilgewasserrückführleitung 32 führt zurück in die Bilge 1 bzw. einen Bilgewasserspeichertank, der wiederum über eine Rohrleitung mit dem Einlass der Pumpe 2 verbunden ist.

Ferner ist im Bereich des Auslasses 15 des chemischen Behandlungstankes 8 eine Druckregelung 33 vorgesehen; und es ist ein Füllstandssensor 34 in dem chemischen Behandlungstank 8 angeordnet.

Mit der in Fig. 1 gezeigten Anlage wird das erfindungsgemäße Verfahren nun wie folgt durchgeführt:
Aus der Bilge 1 wird über die Pumpe 2 Bilgewasser in die Entölungs- und Filteranlage 3 gepumpt. Die Pumpleistung der Pumpe 2 ist dabei bevorzugt so gewählt, dass sie das Füllvolumen des chemischen Behandlungstankes 8 in einer Stunde durchsetzen kann. In dem hier gezeigten Ausführungsbeispiel beträgt das Füllvolumen des chemischen Behandlungstankes 8 2,5 m³, die Pumpe 2 ist demnach mit einer Pumpleistung von 2,5 m³/h ausgelegt.

In der Entölungs- und Filteranlage 3 findet ein erstes Abscheiden von freien, auf dem Bilgewasser aufschwimmenden Ölen, Fetten und sonstigen Kohlenwasserstoffen statt sowie ein Ausfiltern grober partikelförmiger Verunreinigungen. Der Füllstandsensor 4 überwacht dabei, dass ein maximaler Füllstand der Entöiungs- und Filteranlage nicht überschritten wird, indem die Steuerung bei Erreichen eines maximalen Füllstandes die Pumpe 2 abschaltet. Das Volumen der Entölungs- und Filteranlage 3 beträgt in diesem Ausführungsbeispiel etwa 0,87 m³.

Das von der Entölungs- und Filteranlage zurückgehaltene Retentat, eine Mischung aus partikelförmigen Feststoffen sowie abgeschiedenen Ölen, Fetten und sonstigen Kohlenwasserstoffen, wird über die Retentatleitung 5 in die Schlammleitung 6 geführt und von dort in den Schlammtank. Dieser Schlammtank dient zum Sammeln der Kontaminationen, die während der gesamten Schiffsreise mitgeführt werden. Diese werden typischerweise beim Anlaufen eines Hafens über dort ansässige Entsorgungsbetriebe entsorgt.

Über die Filtratleitung 7 gelangt das in der Entölungs- und Filteranlage 3 vorgereinigte Bilgewasser, also das Filtrat, in den chemischen Behandlungstank 8. Zunächst durchläuft das in der Entölungs- und Filteranlage 3 als einer ersten Reinigungsstufe gereinigte Bilgewasser den chemischen Behandlungstank 8 lediglich über den Abfluss 15 und wird über das geöffnete Ventil 18 und die Pumpe 16 weiterbefördert in die Rohrleitung 17. Die Drucküberwachung 33 überwacht dabei den Druckabfall zwischen der Rohrleitung 7 und dem Auslass 15 und gibt ein Signal an die Steuerung, die bei einer Druckanomalie die Pumpe 16 ausschaltet. Auch die Pumpe 16 ist mit ihrer Pumpleistung so eingestellt, dass sie das Fassungsvolumen des chemischen Behandlungstankes 8 in einer Stunde durchsetzen kann, in diesem Ausführungsbeispiel also mit einer Pumpleistung von 2,5 m³/h.

Aus der Rohrleitung 17 gelangt das in der ersten Reinigungsstufe, also der Entölungs- und Filteranlage 3, gereinigte Bilgewasser in den Filter 21 und wird dort ein weiteres Mal einer Filtration unterzogen. Dort zurückgehaltene Rückstände gelangen über die Retentatleitung 22 in die Schlammleitung 6 und damit in den Schlammtank. Das durch diesen Filter 21 weiter gereinigte Bilgewasser wird über die Filtratleitung 23 dem Nachfiltersystem, bestehend aus den Nachfiltern 24 und 25 zugeführt und dabei je nach Schaltstellung der Ventile 26, 27 durch einen der beiden Nachfilter 24 oder 25 geleitet. Das Filtrat dieser Nachfilter 24, 25 verlässt das Nachfiltersystem durch die Ausgangsleitung 28. Das Retentat der Nachfilter 24 und 25 kann über eine hier nicht näher dargestellte Leitung ebenfalls der Schlammleitung 6 zugeführt werden, so dass auch dieses in den Schlammtank gelangt.

In der Ausgangsleitung 28 sitzt der Kontaminationssensor 29. Dieser überwacht die Konzentration des wie vorstehend beschrieben behandelten Bilgewassers, welches einer chemischen Behandlung nicht unterzogen worden ist. Über die Steuerung kann ein Grenzwert eingegeben werden, den die Kontamination nicht übersteigen darf, z.B. die nach MARPOL vorgegebenen Grenzwerte für Ölanteile 15ppm oder 5ppm in Sonderschutzgebieten. Liegt der von dem Kontaminationssensor 29 erfasste Kontaminationswert unterhalb des eingestellten Grenzwertes, so ist von der Steuerung das Dreiwegeventil 30 auf die Abfuhrleitung 31 geschaltet, das Bilgewasser fließt also weiter über diese Abfuhrleitung 31. Die Abfuhrleitung 31 kann dabei (in der Figur nicht näher dargestellt) entweder nach außenbords führen, so dass das gereinigte und behandelte Bilgewasser auf diese Weise von Bord gebracht wird, alternativ kann sie aber auch mit einem Brauchwassertank im Inneren des Schiffes verbunden werden, um diesen aufzufüllen. Das behandelte und somit gereinigte Bilgewasser kann dann z.B. als sogenanntes Grauwasser an Bord verwendet werden, um Toilettenspülungen zu bedienen oder dgl. In der Abfuhrleitung 31 kann insoweit eine weitere Ventilanordnung vorgesehen sein, die den weiteren Weg des behandelten Bilgewassers nach außenbords oder in einen Brauchwassertank (wenn ein solcher zur Befüllung mit gereinigtem Bilgewasser vorgesehen ist) verschaltet.

Überschreitet nun der von dem Kontaminationssensor 29 gemessene Wert für die Kontamination des behandelten Bilgewassers einen voreingestellten Grenzwert, so schaltet die Steuerung das Dreiwegeventil 30 und trennt die Abfuhrleitung 31 von der und verbindet stattdessen die Bilgewasserrückführleitung 32 mit der Ausgangsleitung 28. Bilgewasser wird als kontaminiert zurückgeführt und wird über die Pumpe 2 erneut in den Kreislauf eingespeist, beginnend mit der Entölungs- und Filteranlage 3.

Bei erkanntem Überschreiten eines Kontaminationsgrenzwertes schaltet die Steuerung darüber hinaus in einen zweiten Modus der Behandlung, indem eine chemische Behandlungen in den chemischen Behandlungstank zur weiteren Reinigung des Bilgewassers zugeschaltet wird. Hierzu wird das Ventil 18 im Auslass 15 des chemischen Behandlungstages 8 geschlossen, und das Dreiwegeventil 19 trennt die Rohrleitung 17 von dem Zulauf zu dem Filter 21 verbindet diese mit der Kühlleitung 20. Die Pumpe 16 pumpt dann noch in der Rohrleitung 17 vorhandenes Bilgewasser über die Rückführleitung 20 in den chemischen Behandlungstank 8, schaltet bei Erkennen einer Druckanomalie die Druckregelung 33 oder aber alternativ nach einer vorgegebenen Zeitspanne ab.

Nun wird der chemische Behandlungstank 8 mit aus der Entölungs- und Filteranlage 3 austretendem Filtrat gefüllt bis zu einem Füllstand für die Behandlung einer Charge. Der Füllstand wird mittels des Füllstandssensors 34 überwacht. Ist der Füllstand, bei dem in dem chemischen Behandlungstank 8 die chemische Behandlung durchgeführt werden soll, erreicht, wird die Pumpe 2 gestoppt, und ein weiterer Zulauf zu dem chemischen Behandlungstank 8 unterbunden. Es setzt nun die chemische Behandlung ein. Hierzu wird zunächst mittels des Dosiersystems 12 und über die Zulaufleitung 9 ein Säuerungsmittel, in diesem Ausführungsbeispiel ein Salzsäure und Eisen(II)-Sulfat Heptahydrat enthaltendes Mittel, in den chemischen Behandlungstank 8 eindosiert. Dieses Zudosieren erfolgt solange, bis ein für ein Wirken eines nachfolgend einzudosierenden Fällungsmittels geeigneter pH-Wert erreicht ist. Dies wird über einen hier nicht dargestellten, in dem chemischen Behandlungstank 8 angebrachten und mit der Steuerung verbundenen pH-Sensor durchgeführt. Der zu erzielende pH-Wert liegt dabei vorzugsweise zwischen pH3 und pH6. Ist der pH-Wert erreicht, so startet die Steuerung die Zudosierung des Dosiersystems 12 und gibt das Dosiersystem 13 frei. Über dieses wird nun eine passende Menge eines Fällungsmittels über die Zulaufleitung 10 in den chemischen Behandlungstank 8 eingespeist. Dieses Fällungsmittel enthält im Ausführungsbeispiel Natriumhydroxid, welches im Umfeld des sauren Mediums ein Ausfällen der Kontaminationsstoffe bewirkt. Nach Ablauf einer geeigneten Einwirkzeit, in der die Fällreaktionen abgelaufen sind, gibt die Steuerung ein Signal an das Dosiersystem 14 zum Zudosieren eines Neutralisationsmittels durch die Zulaufleitung 11. In diesem Ausführungsbeispiel ist das Neutralisationsmittel Ätznatron. Dieses Ätznatron wird in einer solchen Menge zugegeben, bis der pH-Sensor in dem chemischen Behandlungstank 8 wieder einen neutralen pH-Wert von pH7 zeigt. Nun ist die chemische Behandlung des Bilgewassers in dem chemischen Behandlungstank 8 beendet, von der Steuerung wird das Ventil 18 im Ablauf 1 5 geöffnet, die Pumpe 16 gestartet und das Dreiwegeventil 19 zum Verbinden der Rohrleitung 17 mit dem Filter 21 geschaltet, die Rückführleitung 20 wird hingegen abgetrennt.

In dem Filter 21 werden die während der chemischen Behandlung im chemischen Behandlungstank 8 ausgefällten Feststoffe abgefiltert und über die Retentatleitung 22 in die Schlammleitung 6 und damit zum Schlammtank gegeben. Das Filtrat des Filters 21 gelangt über die Filtratleitung 23 wieder durch das Nachfiltersystem mit den Nachfiltern 24 und 25 und von dort in die Ausgangsleitung 28. Der Kontaminationssensor 29 wird nun keine Belastung mehr feststellen, so dass das behandelte Bilgewasser über die Abfuhrleitung 31 geführt und in oben beschriebener Weise weitergeleitet und ggf. verwendet werden kann. Sollte, was nach der chemischen Behandlung nicht zu erwarten ist, der Kontaminationssensor 29 erneut eine Kontamination feststellen, würde von der Steuerung das Dreiwegeventil 30 erneut geschaltet, um die Ausgangsleitung 28 mit der Bilgewasserrückführleitung 32 zu verbinden und das nach wie vor kontaminierte Wasser in den Behandlungskreislauf zurückzuführen.

Je nach vor Durchführung der chemischen Behandlung festgestellter Kontaminationshöhe kann der chargenweise Durchlauf mit einer chemischen Reinigung in dem chemischen Reinigungsbehälter 8 von der Steuerung mehrmals hintereinander durchgeführt und geschaltet werden. Es kann aber auch bereits nach einmaliger Durchführung einer chemischen Behandlung im Anschluss die Behandlungsanlage in den Modus zurückgestellt werden, in dem der chemische Behandlungstank 8 nur zur Durchleitung verwendet wird und in einem ersten Anlauf das durch die Entölungs- und Filteranlage 3, den Filter 21 und das Nachfiltersystem mit dem Nachfilter 24 bzw. 25 gereinigte und behandelte Bilgewasser in Richtung der Ausgangsleitung 28 gegeben werden, ohne dass eine chemische Behandlung im chemischen Behandlungstank 8 erfolgt. Eine solche kann von der Steuerung in der oben beschriebenen Weise erst dann wieder vorgesehen werden, wenn eine erneute Überschreitung des Grenzwertes für die Kontamination an dem Kontaminationssensor 29 festgestellt wird.

Aus der obigen Beschreibung ist deutlich geworden, dass das mit dem in Fig. 1 dargestellten System durchgeführte Verfahren zur Behandlung von Bilgewasser aus dem Schiffsbetrieb ein Hybridverfahren ist aus einem kontinuierlichen Verfahren und einem chargeweise arbeitenden Verfahren. So wird das Bilgewasser bevorzugt kontinuierlich behandelt, wobei der chemische Behandlungstank 8 lediglich als Durchlauf verwendet wird, solange die nach der Behandlung an dem Kontaminationssensor 29 festgestellte Kontamination einen Grenzwert nicht übersteigt. Allein dann, wenn eine zusätzliche Behandlung des Bilgewassers wegen besonders hoher Kontamination erforderlich wird, wird umgeschaltet auf ein chargenweises Behandeln in dem chemischen Behandlungstank 8. Die Durchführung einer chargenweise Behandlung des Bilgewassers nur im tatsächlichen Bedarfsfall erhöht einesteils den Behandlungsdurchsatz, da eine Durchlaufbehandlung mit größeren Volumina pro Zeiteinheit erfolgen kann, anderenteils wird der Einsatz der mit dem Dosiersystemen 12, 13, 14 für die chemische Behandlung einzubringenden Chemikalien reduziert, was eine Belastung des bei der Behandlung anfallenden Schlammes mit zusätzlichen Chemikalien verringert und zudem die Kosten reduziert.

Es sollte ferner klar sein, dass die Steuerung derart eingerichtet sein kann, dass bei einer Feststellung eines Überschreitens des Kontaminationsgrenzwertes an dem Kontaminationssensor 29 nicht sofort die Durchleitung des Bilgewassers in die Abfuhrleitung 31 unterbunden wird, sondern erst bei einer Überschreitung über eine vorgegebene Zeitspanne. Auf diese Weise werden Messfehler und Ausreißerwerte ignoriert, erst wenn zuverlässig eine Kontamination festgestellt wird, wird der kontinuierliche Durchlauf unterbrochen und auf einen chargenweisen Betrieb mit der zusätzlichen chemischen Reinigungsbehandlung des Bilgewassers in der chemischen zweiten Behandlungsstufe eingeleitet.

### Bezugszeichenliste

- 1: Bilge
- 2: Pumpe
- 3: Entölungs- und Filteranlage
- 4: Füllstandssensor
- 5: Retentatleitung
- 6: Schlammleitung
- 7: Filtratleitung
- 8: chemischer Behandlungstank
- 9: Zulaufleitung
- 10: Zulaufleitung
- 11: Zulaufleitung
- 12: Dosiersystem
- 13: Dosiersystem
- 14: Dosiersystem
- 15: Auslass
- 16: Pumpe
- 17: Rohrleitung
- 18: Ventil
- 19: Dreiwegeventil
- 20: Rückführleitung
- 21: Filter
- 22: Retentatleitung
- 23: Filtratleitung
- 24: Nachfilter
- 25: Nachfilter
- 26: Ventil
- 27: Ventil
- 28: Ausgangsleitung
- 29: Kontaminationssensor
- 30: Dreiwegeventil
- 31: Abfuhrleitung
- 32: Bilgewasserrückführleitung
- 33: Druckregelung
- 34: Füllstandssensor

## Patentansprüche

1. Verfahren zur Behandlung von Bilgewasser aus dem Schiffsbetrieb, bei dem das Bilgewasser in einer ersten Reinigungsstufe kontinuierlich durch eine erste Entölungs- und Filteranlage und anschließend für eine mögliche Reinigung in einer zweiten Reinigungsstufe in einen chemischen Behandlungstank geführt wird, **dadurch gekennzeichnet, dass** das Bilgewasser zunächst ohne weitere Behandlung aus dem chemischen Behandlungstank abgelassen und über ein Sensorelement zur Ermittlung einer Kontaminationskonzentration geleitet wird, wobei das aus dem Behandlungstank austretende Bilgewasser als nicht kontaminiert eingestuft und abgeführt wird, wenn die von dem Sensorelement ermittelte Kontaminationskonzentration einen vorgebbaren Grenzwert nicht überschreitet, dass das aus dem chemischen Behandlungstank auslaufende Bilgewasser hingegen, wenn die von dem Sensorelement ermittelte Kontaminationskonzentration den vorgebbaren Grenzwert überschreitet, als kontaminiert eingestuft und zurückgeführt wird zur nochmaligen Einspeisung in den chemischen Behandlungstank, der dann mit einer Charge Bilgewasser befüllt wird, die einer chemischen Behandlung zur Ausfällung von Kontaminationen unterzogen und nach Ablauf der Behandlungsdauer abgelassen und über das Sensorelement zur Ermittlung der Kontaminationskonzentration geführt und bei Einhaltung des Grenzwertes abgeführt wird.

2. Verfahren nach Anspruch 1, **dadurch gekennzeichnet, dass** das Bilgewasser bei Überschreiten des vorgebbaren Grenzwertes für die Kontamination zurückgeführt wird bis vor die erste Entölungs- und Filteranlage, die es anschließend erneut durchläuft.

3. Verfahren nach einem der Ansprüche 1 oder 2, **dadurch gekennzeichnet, dass** das aus dem chemischen Behandlungstank austretende Bilgewasser vor dem Sensorelement durch wenigstens ein Filterelement geführt wird zum Ausfiltern von Ausfällungen und/oder Schwebstoffen.

4. Verfahren nach einem der vorhergehenden Ansprüche, **dadurch gekennzeichnet, dass** bei festgestellter Überschreitung des Grenzwertes für die Kontamination der Ablauf des chemischen Behandlungstankes geschlossen und nach Erreichen eines Behandlungssfüllstandes des chemischen Behandlungstankes für die Dauer der chemischen Behandlung der Durchlauf von Bilgewasser durch die erste Entölungs- und Filteranlage gestoppt wird.

5. Verfahren nach einem der vorhergehenden Ansprüche, **dadurch gekennzeichnet, dass** für die chemische Behandlung des als kontaminiert erkannten Bilgewassers in dem chemischen Behandlungstank in folgenden Schritten chemische Behandlungsmittel zugesetzt werden:
a) in einem ersten Schritt ein Säuerungsmittel zum Absenken des pH-Wertes auf einen für ein Fällungsmittel geeigneten Wert;
b) in einem zweiten Ausfällschritt das Fällungsmittel zum Binden und Ausfällen von in dem Bilgewasser enthaltenen Kontaminationen, insbesondere Kohlenwasserstoffverbindungen und/oder Schwermetallen;
c) in einem dritten Neutralisationsschritt ein Neutralisierungsmittel zum Anheben des pH-Wertes auf einen neutralen Wert.

6. Verfahren nach Anspruch 5, **dadurch gekennzeichnet, dass** das Säuerungsmittel Salzsäure und Eisen(II)-Sulfat oder das Heptahydrat dieses Salzes enthält.

7. Verfahren nach einem der Ansprüche 5 oder 6, **dadurch gekennzeichnet, dass** das Fällungsmittel Natriumhydroxid enthält.

8. Verfahren nach einem der Anspräche 5 bis 7, **dadurch gekennzeichnet, dass** als Neutralisationsmittel Ätznatron verwendet wird.

9. Verfahren nach einem der Ansprüche 5 bis 8, **dadurch gekennzeichnet, dass** das Bilgewasser in Schritt a) der pH-Wert auf einen Wert von 3 bis 6 abgesenkt wird.

10. Verfahren nach einem der Ansprüche 5 bis 9, **dadurch gekennzeichnet, dass** dem Bilgewasser zusätzlich zu dem Fällungsmittel zur Beschleunigung des Ausfällvorganges ein Flockungshilfsmittel zugegeben wird.

11. Verfahren nach einem der vorhergehenden Ansprüche, **dadurch gekennzeichnet, dass** das abgeführte, behandelte Bilgewasser wahlweise über Bord des Schiffes gepumpt oder aber in einem Brauchwasser-Sammelbehälter gesammelt und als Brauchwasser an Bord des Schiffes eingesetzt wird.
